# EUROPEAN PATENT APPLICATION

(11) **EP 4 764 939 A1**
(43) Date of publication of application: **24.06.2026**
(21) Application number: 25217873.6
(22) Date of filing: 24.11.2025
(51) Int. Cl.: G06F 30/398, G01R 31/00

(54) **ESD (ELECTROSTATIC DISCHARGE) VERIFICATION FOR LARGE IO (INPUT/OUTPUT) ARRAYS**

(30) Priority: 20.12.2024 US 202418991240
(71) Applicant: INTEL Corporation, Santa Clara, CA 95054 (US)
(72) Inventor: RICHAUD, Nicolas, 00157 Rome (IT); DOMANSKI, Krzysztof, 81547 München (DE); DHAKAD, Harshit, 560066 Bangalore KA (IN); KLOTZ, Florian, 81547 München (DE); GOSSNER, Harald, 85521 Riemerling (DE)
(74) Representative: 2SPL Patentanwälte PartG mbB

(57) **Abstract**

A test system performs ESD (electrostatic discharge) verification of a circuit definition. The system performs a bottom-up ESD analysis to generate a verified IO (input/output) instance, and then performs a top-down ESD analysis based on multiple instances of the verified IO instance. The system generates an ESD verification model 10 instance with ESD protection circuitry and the ESD victim circuitry as separate cells at the same level of verification hierarchy, and verifies the model IO instance at a worst case connection test case. The system then scales out the IO instance into an array of instances to verify ESD protection between the model IO instances.

## Description

### FIELD

Descriptions are generally related to test systems, and more particular descriptions are related to ESD verification for IO.

### BACKGROUND

One stage of finalizing a chip design is verification of ESD (electrostatic discharge) protection. ESD protection verification checks the IO (input/output) interfaces of the chip. The trend to use multiple chiplets in advanced 2.5/3D (2.5-dimensional/3-dimensional) packages is accompanied by an increasing number of D2D (die-to-die) interfaces. The IO interfaces are typically verified during the pre-silicon physical verification of the layout, which is the ultimate design checkpoint before tape-out. The verification of ESD robustness of the design is highly compute intensive. With multi-chiplet designs, even high performance compute resources could take several days to run at the chip top level.

To avoid delays in ESD sign-off, which could in turn delay the tape-out of the IC (integrated circuit), some chip top level ESD checks can be reduced. Instead of performing a thorough check, the system could be configured to not check all ESD rules, not check all IOs, or the verification model can be restricted from checking all components of the IO.

In case of unsolved sign-off tool exits or excessive runtime, ESD experts perform a manual review of each IO with respect to the multiple ESD verification checks. It will be understood that a manual review of thousands of IOs covering dozens of ESD rules adds risk to the sign-off process which can result in failures during ESD lab testing or product qualification.

### BRIEF DESCRIPTION OF THE DRAWINGS

The following description includes discussion of figures having illustrations given by way of example of an implementation. The drawings should be understood by way of example, and not by way of limitation. As used herein, references to one or more examples are to be understood as describing a particular feature, structure, or characteristic included in at least one implementation of the invention. Phrases such as "in one example" or "in an alternative example" appearing herein provide examples of implementations of the invention, and do not necessarily all refer to the same implementation. However, they are also not necessarily mutually exclusive.
**Figure** 1 is a block diagram of an example of a system that performs ESD verification.
**Figure** 2 is a diagram of an example of an ESD verification model.
**Figure** 3 is a block diagram of an example of an IO unit model for a bottom-up analysis.
**Figure** 4 is a diagram of an example of an ESD verification with ESD paths.
**Figure 5** is a block diagram of an example of an IO unit model with different ESD victims separated in the model.
**Figure 6** is a block diagram of an example of a system model having multiple instances for a verified IO unit model for a top-down analysis.
**Figure 7** is a flow diagram of an example of process for performing an ESD verification.
**Figure 8** is a block diagram of an example of a computing system with which ESD verification can be implemented.

Descriptions of certain details and implementations follow, including non-limiting descriptions of the figures, which may depict some or all examples, and well as other potential implementations.

### DETAILED DESCRIPTION

As described herein, a test system performs ESD (electrostatic discharge) verification of a circuit design. The system first performs a bottom-up ESD analysis to generate a verified IO (input/output) instance, and then performs a top-down ESD analysis based on generating an array from multiple instances of the verified IO instance. A bottom-up analysis refers to an analysis starting at the device/cell level and building up to the pad level and the full chip level. The system generates an ESD verification model IO instance with ESD protection circuitry and the ESD victim circuitry as separate cells at the same level of verification hierarchy, and verifies the model IO instance at a worst case connection test case. The system then scales out the IO instance into an array of instances to verify ESD protection between the IO instances.

By scaling out IO instances that have already been verified, the ESD verification can be applied to complex design packaging, such as 2.5/3D (2.5-dimensional/3-dimensional) packages with D2D (die-to-die) interfaces. The scaling out of verified instances as black boxes allows the system to scale to hundreds of IOs or thousands of IOs, which is common to packages having chiplets.

The test system described creates a hierarchy from the bottom up to enable a bottom-up analysis, which simplifies a subsequent top-down analysis. The system then uses the results of the bottom-up analysis to black-box the components in the low-level analysis. The low-level analysis can lead to the use of black-box components in the full system analysis because the IO blocks simulate the ESD paths for each IO pad. The use of the black-box components to scale out the full system allows a top-down analysis for verification, where the top-down analysis is significantly reduced in complexity.

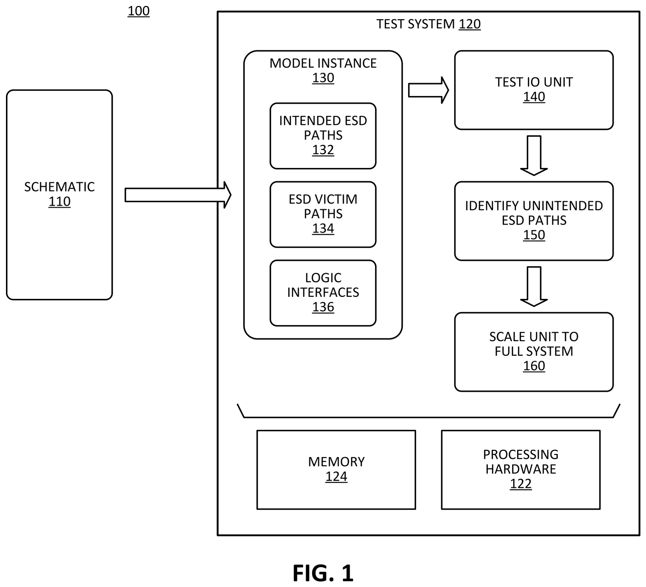

**Figure 1** is a block diagram of an example of a system that performs ESD verification. System 100 illustrates a test system for ESD verification testing. Test system 120 receives a definition of the circuitry to be tested. The circuit definition can be for the entire chip package, including IO for the chip and die-to-die IO for chiplets in the package. Schematic 110 represents the circuit definition provided to test system 120.

Test system 120 includes processing hardware 122 and memory 124. Memory 124 represents a memory device that stores the circuit definition, including models and test definitions generated by the system. Memory 124 also stores the verification programs and algorithms executed by processing hardware 122. Memory 124 can store models and configuration generated by processing hardware 122.

Processing hardware 122 includes processor devices and supporting hardware to perform computations. In one example, processing hardware 122 executes a test program to perform the verification operations. The program can refer to code executed by processing hardware 122. Some code can first verify the operation of the low-level components. Other code can verify at the chip top level based on the verification at the low level.

The code can include a runset setup file, referring to code that allows the system to configure the system as a composition of black boxes verified at the low level to verify the whole system. The program can run verification checks such as ESD P2P (parasitic point-to-point) resistance, CD (current density), TOPO (layout/schematic topological) checks, LVS (layout versus schematic) checks, DRC (design rules checks), or other verifications, or a combination.

In one example, processing hardware 122 generates model instance 130 from schematic 110. Model instance 130 represents the bottom-up verification analysis. More specifically, model instance 130 organizes the low-level components as intended ESD paths 132, ESD victim paths 134, and logic interface 136.

Intended ESD paths 132 represent the paths for ESD through the ESD protection circuits. ESD victim paths 134 represent the paths ESD could travel through driver circuits instead of traveling through the ESD protection circuits. Logic interfaces 136 represent the logic components that are not directly connected to the IO circuit, but are close enough in proximity that ESD charge could travel to the components through the voltage rails. The voltage rails refer to the low voltage reference, such as VSS (voltage source, low voltage), and the high voltage reference, such as VDD (voltage source, high voltage).

Processing hardware 122 tests model instance 130 as a unit for a single IO. Test IO unit 140 represents the testing by processing hardware 122 to perform verification of the single model instance for one IO. In one example, test system 120 applies the verified IO unit to a full representation of schematic 110.

In one example, processing hardware 122 performs a path verification of the full circuit representation. Identify unintended ESD paths 150 represents the path verification. With the path verification, test system 120 can identify paths in the circuit representation that are present in the model that should not be. A path should not be present in the model if it exists at the level of the black box components of the verified IO units and is not a path between IOs. When such a path is found, the system can remove the path before performing a full circuit verification.

Scale unit to full system 160 represents the ability of processing hardware 122 to execute a circuit verification based on the verified smaller units. The verification analysis of the full circuit with the black box units has significant advantages over a full analysis from the circuit top level. Namely, the black box units are components that have already been verified internally for ESD protection; thus, the analysis at the chip level can analyze the connections between IOs instead of attempting to analyze the entire path from top to bottom.

The use of the black box components simplifies the analysis because the top down analysis can stop at the interface to the verified units that were already verified from the bottom up. In one example, the verification operations can be performed sequentially for a bottom-up analysis from the circuit level to cell to IC level, and then a top-down analysis from the IC level to the cell to the circuit level.

The ESD verification described can perform analysis of more bumps/pads than can reasonably be verified with a typical system. Verifying all IO connections and all drivers for the IO pads can be extremely complex, which is why ESD checks on the chip top level can have runtimes that exceed what is permissible within testing parameters. Thus, instead of reducing complexity by reducing the number of IOs checked or by reducing the parameters checked, system 100 can check all IO connections and full parameters due to reducing the complexity of the top-down analysis. Even with a full analysis, system 100 can perform the ESD verification in a reasonable amount of time.

The reuse of the ESD verification at the cell level simplifies the full-chip verification. Additionally, it reduces the need for high-performance compute resources to execute the ESD verification. The IO cell for the model can be configured as a hierarchy where circuits intended for ESD check and circuits not intended for ESD check are placed in separate subcells. In one example, the runset for the full chip enables a user to remove defined cells from the ESD check. The removing of the cells/subcells that are already verified can be referred to as "black-boxing" the components. In one example, a black box contains only one or more ESD victims and one or more ESD diode paths. The black box has signature characteristics to apply to the IO array.

The system can build a setup file for the ESD runset with black-box statements that exclude the unintended IO subcells from ESD check at the chip level. In one example, the configuration of the test model is flexible to allow different subcells to be explicitly included or excluded from the black box statements. Such capability enables the user to set different testing, depending on the needs of the executed check on the same IO component. It will be understood that the array of IO can be applied to D2D IO arrays, chip IO arrays, or a combination of different IO arrays for the top-level analysis, or for the cell analysis.

In one example, test system 120 receives schematic 110, which represents a circuit definition for a die package having an array of IO connections to be verified for ESD protection. In one example, the array represents all IO connections in the die package. In one example, the array represents a selection of the IO connections. The IO connections each have an ESD protection circuit and ESD victim circuits coupled to a power clamp between the voltage rails.

The verification includes generating model instance 130 as an ESD verification model IO instance with intended ESD paths 132 and ESD victim paths 134 as separate cells in the IO unit, with the cells being at the same level of hierarchy for analysis. In one example, the IO unit does not include logic interfaces 136. In one example, the IO model includes logic interfaces 136. In one example, test IO unit 140 verifies the ESD robustness of the circuit design by testing the model at the worst-case connection to the power clamp. The worst-case connection can refer to the worst-case resistance between the power clamp and the IO unit.

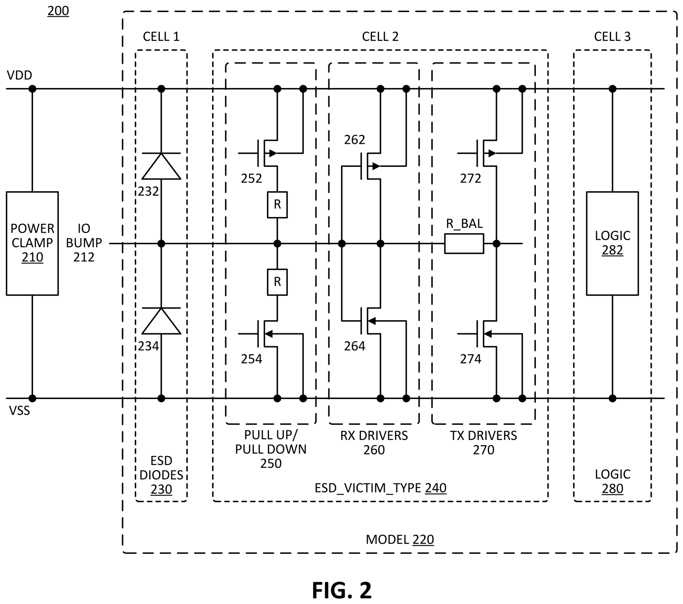

**Figure 2** is a diagram of an example of an ESD verification model. System 200 represents a circuit model for an IO unit for verification in accordance with an example of system 100. System 200 represents the IO cell coupled to the power clamp, with various circuits represented as different cells.

Power clamp 210 represents a power clamp circuit, which is a circuit that maintains the levels of the voltage rails. Power clamp 210 represents a circuit that can reduce power rail variance when a surge, such as an ESD charge, is introduced. In one example, power clamp 210 is implemented with an RC (resistive-capacitive) time and pass device. In one example, power clamp 210 represents a capacitor used as a clamp. In one example, power clamp 210 is implemented by a breakdown element, such as an npn BJT (bipolar junction transistor), thyristor, or other breakdown clamp. In one example, power clamp 210 includes a reverse diode.

IO bump 212 represents a bump, pad, pin, or other IO connection point. For simplicity, "IO bump" will be used to refer to the point of connection from an external source to the IO interface. IO bump 212 can represent an external connection, such as a connection that extends to the die package, or an internal connection, such as a D2D connection between a chiplet and another chiplet or a substrate.

IO bump 212 can alternatively be referred to as a pad. The cells at a pad can be implemented as an input and output cell, an input only cell, an output only cell, or any combination of these. In one example, the cells can be connected to die-to-die bumps, package bumps, bounding interconnect elements, or a combination of these.

Model 220 represents the IO unit for ESD verification at the low level. Model 220 provides a component for a bottom-up analysis. Model 220 includes multiple cells (which can be referred as subcells if model 220 represents the IO unit as a cell for testing). In one example, model 220 includes Cell 1, which is a cell for ESD protection circuitry, Cell 2, which is a cell for ESD victim circuitry, and Cell 3, which is a cell for other logic.

Cell 1 includes ESD diodes 230. ESD diodes 230 can include diode 234 as a first ESD diode structure (which can include one or more diode circuit elements) between VSS and IO bump 212 and diode 232 as a second ESD diode structure between IO bump 212 and VDD. Cell 1 represents the cell for the intended ESD path. The intended ESD path is designed to protect the circuitry from ESD charge.

Cell 2 includes multiple sub-cells, all of which can be different ESD victims. Cell 2 is represented as ESD_VICTIM_TYPE 240. In one example, there are multiple victim types, and Cell 2 could be separated into different cells with different components.

In one example, Cell 2 includes pull up/pull down 250, which represents circuitry to drive the IO signal lines. The pull up circuitry is represented by transistor 252, which pulls IO bump 212 to VDD. There can be some resistance, R, for the pull up. The pull down circuitry is represented by transistor 254, which pulls IO bump 212 to VSS. There can be some resistance, R, for the pull down leg, which is not necessarily the same resistance as for the pull up leg.

In one example, Cell 2 includes RX (receive) drivers 260, which represents receiver driver circuitry for receiving signals from another device. RX drivers 260 can include pull-up transistor 262 and pull-down transistor 264.

In one example, Cell 2 includes TX (transmit) drivers 270, which represents transmitter driver circuitry for transmitting signals to another device. TX drivers 270 can include pull-up transistor 272 and pull-down transistor 274. R_BAL represents a ballast resistance, which can improve the robustness of the IO connection transistors against ESD charges.

Cell 3 includes logic 280. Logic 280 illustrates logic device 282, which represents one or more logic components connected between VDD and VSS in proximity with IO bump 212, which are not directly connected to IO bump 212. Logic 280 can represent logic unrelated to the driving of IO bump 212.

From system 200, it can be seen that Cell 1, Cell 2, and Cell 3 are separate cells having the same level of verification hierarchy. Within ESD_VICTIM_TYPE 240, there can be another layer of hierarchy, with ESD protection circuits, ESD victim circuits, and separate logic can be treated as the same level of verification hierarchy. Thus, the ESD victim cells can be sub-cells of Cell 2, where different victim circuits can be treated at the same level of hierarchy. In one example, a specific victim circuit can be separated at the same level of verification hierarchy as the other victim circuits. For example, a specific circuit within one of the victim sub-cells can brought out as another victim sub-cell instead of being within a sub-cell with other circuits.

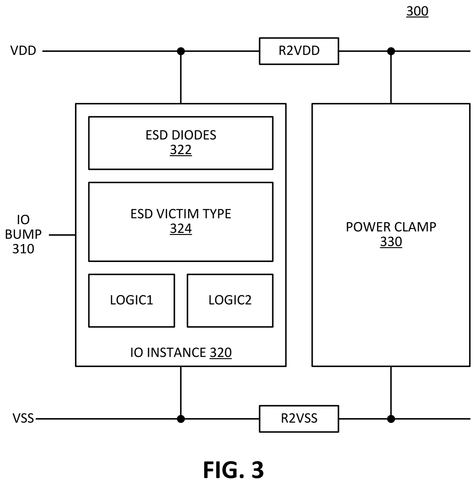

**Figure 3** is a block diagram of an example of an IO unit model for a bottom-up analysis. System 300 represents an abstraction of an example of system 200. System 300 illustrates an example of system 200 as a black box representation.

System 300 includes IO bump 310 coupled to IO instance 320. IO instance 320 represents an abstraction of the IO connection. IO instance 320 provides a black box representation to verify the ESD performance of the low level circuits, with separate cells organized hierarchically.

IO instance 320 includes ESD diodes 322, representing the intended ESD path(s) for IO instance 320. IO instance 320 includes ESD victim type 324, representing the circuits that can be victims of an ESD charge. The victim circuits could experience damage from energy from an ESD charge that does not flow only through the intended path. In one example, IO instance 320 includes Logic1 and Logic2, which represent logic devices not directly related to driving signals through IO bump 310.

System 300 illustrates power clamp 330 coupled between VDD and VSS. System 300 illustrates R2VDD (resistance to VDD) and R2VSS (resistance to VSS). R2VDD and R2VSS represent worst-case resistance for a test case. Thus, testing with R2VDD and R2VSS shows the worst positioning for IO instance 320, and different instances in a full array will not have worse performance than what is tested for IO instance 320.

By testing the worst case, system 300 provides an analysis that should apply to any IO in the arrays to be tested. Thus, the results for system 300 can be used as testing parameters for verification of the full IO array. Using the results as testing parameters turns IO instance 320 in a black box component in the full IO array.

In one example, system 300 has a defined hierarchy, which can be signed off in a standalone, worst-case configuration of the connection to power clamp 330. In one example, the ability to represent components as black boxes is a feature that can be added or enabled in the runset. For cells with defined names and low-level verification, the cells can be removed from analysis when verifying top level of the chip.

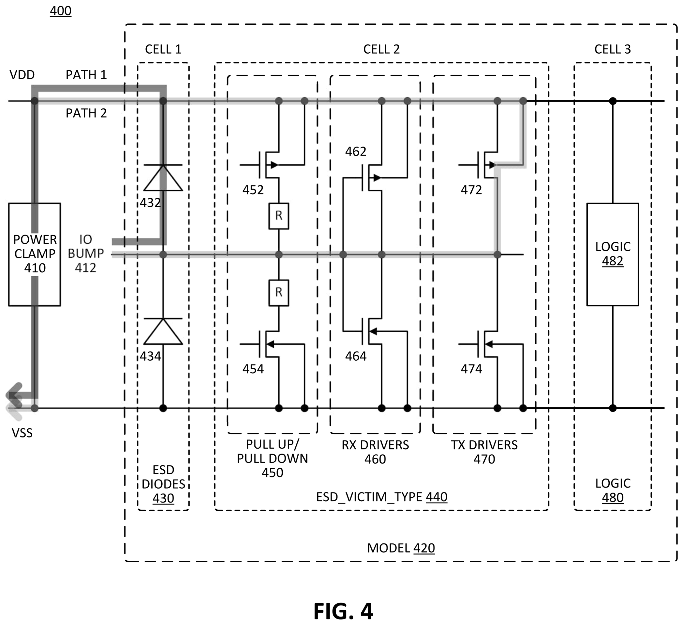

**Figure 4** is a diagram of an example of ESD paths for an ESD verification model. System 400 represents a circuit model for an IO unit for verification in accordance with an example of system 100. System 400 represents the IO cell coupled to the power clamp, with various circuits represented as different cells. System 400 provides an example of system 200, illustrating potential ESD paths.

Power clamp 410 represents a power clamp circuit, which is a circuit that maintains the levels of the voltage rails. Power clamp 410 represents a circuit that can reduce power rail variance when a surge, such as an ESD charge, is introduced.

IO bump 412 represents a bump, pad, pin, or other IO connection point. IO bump 412 can represent an external connection, such as a connection that extends to the die package, or an internal connection, such as a D2D connection between a chiplet and another chiplet or a substrate.

Model 420 represents the IO unit for ESD verification at the low level. Model 420 provides a component for a bottom-up analysis. Model 420 includes multiple cells. In one example, model 420 includes Cell 1, which is a cell for ESD protection circuitry, Cell 2, which is a cell for ESD victim circuitry, and Cell 3, which is a cell for other logic.

Cell 1 includes ESD diodes 430. ESD diodes 430 can include diode 434 as a first diode structure between VSS and IO bump 412 and diode 432 as a second diode structure between IO bump 412 and VDD. Cell 1 represents the cell for the intended ESD path.

Cell 2 includes multiple sub-cells, all of which can be different ESD victims. Cell 2 is represented as ESD_VICTIM_TYPE 440. In one example, there are multiple victim types, and Cell 2 could be separated into different cells with different components.

In one example, Cell 2 includes pull up/pull down 450, which represents circuitry to drive the IO signal lines. The pull up circuitry is represented by transistor 452, which pulls IO bump 412 to VDD. There can be some resistance, R, for the pull up. The pull down circuitry is represented by transistor 454, which pulls IO bump 412 to VSS. There can be some resistance, R, for the pull down leg, which is not necessarily the same resistance as for the pull up leg.

In one example, Cell 2 includes RX (receive) drivers 460, which represents receiver driver circuitry for receiving signals from another device. RX drivers 460 can include pull-up transistor 462 and pull-down transistor 464.

In one example, Cell 2 includes TX (transmit) drivers 470, which represents transmitter driver circuitry for transmitting signals to another device. TX drivers 470 can include pull-up transistor 472 and pull-down transistor 474.

Cell 3 includes logic 480. Logic 480 illustrates logic device 482, which represents one or more logic components connected between VDD and VSS in proximity with IO bump 412, which are not directly connected to IO bump 412. Logic 480 can represent logic unrelated to the driving of IO bump 412.

System 400 illustrates Path 1, which is the path of ESD current from IO bump 412, through the branch point between diode 432 and diode 434, through diode 432 to the VDD line, and through power clamp 410 to VSS. System 400 illustrates Path 2, which is the path of ESD current from IO bump 412, through the branch point between diode 432 and diode 434, through the signal line to the branch point of TX drivers 470, through the source and body of transistor 472, then through the VDD line and through power clamp 410 to VSS.

Path 1 represents the intended ESD path. Path 2 represents a victim path. In one example, TX drivers 470 are treated as part of ESD_VICTIM_TYPE 440. In one example, TX drivers 470 are separated from ESD_VICTIM_TYPE 440 to specifically test the ESD path through transistor 472. Thus, TX drivers 470 can be separated as a separate cell.

In one example, the implicit ESD current path of Path 2 can be added to the sign-off via a separate cell for TX drivers 470. In one example, the driver with implicit ESD path can be placed in a separate instance that is not included into the "black-box" statement in the runset setup file with the other ESD victims of the IO instance model. The ability to separate different components enables the system to be configured to test different parameters, such as explicitly testing Path 2 in the context of the top-down analysis.

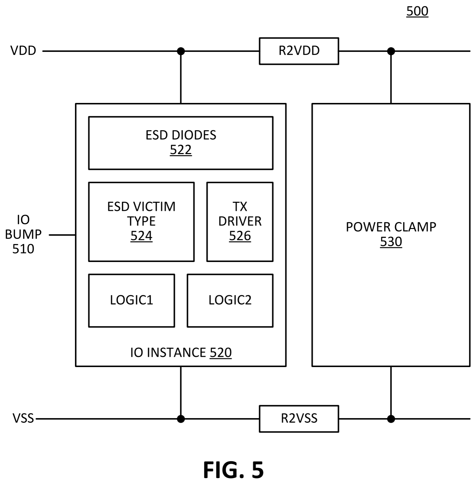

**Figure 5** is a block diagram of an example of an IO unit model with different ESD victims separated in a bottom-up analysis. System 500 represents an abstraction of an example of system 400. System 500 illustrates an example of system 500 as a black box representation. System 500 is an alternative to system 300.

System 500 includes IO bump 510 coupled to IO instance 520. IO instance 520 represents an abstraction of the IO connection. IO instance 520 provides a black box representation to verify the ESD performance of the low level circuits, with separate cells organized hierarchically.

IO instance 520 includes ESD diodes 522, representing the intended ESD path(s) for IO instance 520. IO instance 520 includes ESD victim type 524, representing the circuits that can be victims of an ESD charge. The victim circuits could experience damage from energy from an ESD charge that does not flow only through the intended path. In one example, IO instance 520 includes Logic1 and Logic2, which represent logic devices not directly related to driving signals through IO bump 510.

System 500 illustrates power clamp 530 coupled between VDD and VSS. System 500 illustrates R2VDD (resistance to VDD) and R2VSS (resistance to VSS). R2VDD and R2VSS represent worst-case resistance for a test case. Thus, testing with R2VDD and R2VSS shows the worst positioning for IO instance 520, and different instances in a full array will not have worse performance than what is tested for IO instance 520.

Where in system 300, the TX drivers are specifically included in the ESD victims of the IO instance, the TX drivers are separated in IO instance 520. Thus, TX driver 526 represents an ESD current path through the TX drivers that can be tested at the same level of hierarchy as ESD diodes 522 and ESD victim type 524. Thus, the explicit path of ESD diodes 522 represent one component for the analysis, ESD victim type 524 represents an implicit path at that level of hierarchy, and TX driver 526 represents another implicit path at that level of hierarchy that can be analyzed during verification from the top level.

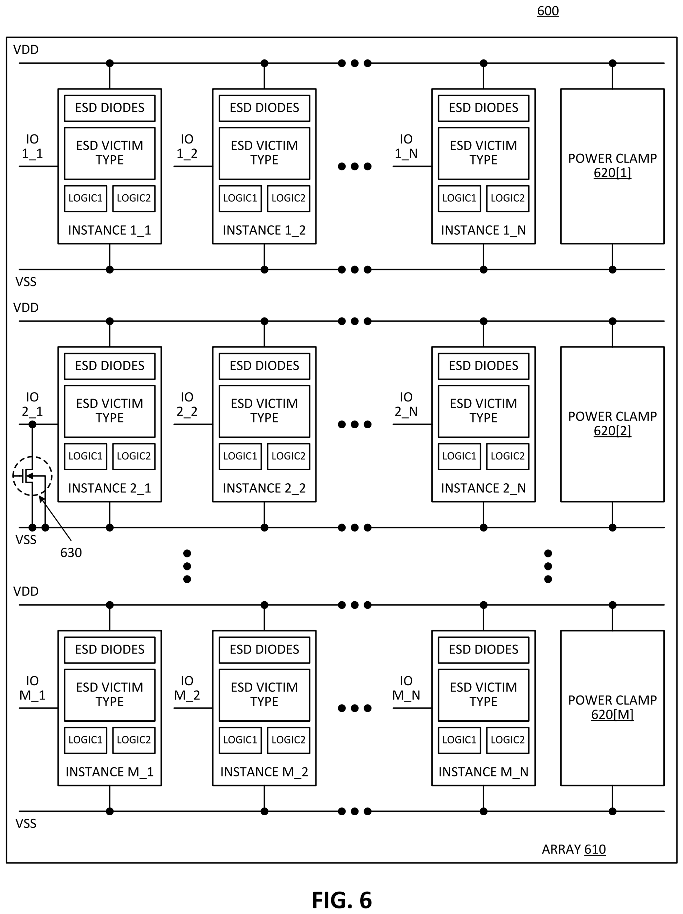

**Figure 6** is a block diagram of an example of a system model having multiple instances for a verified IO unit model for a top-down analysis. System 600 represents a verification model in accordance with an example of system 300 or an example of system 500.

System 600 illustrates array 610, which is a model IO array with an MxN array of IO instances that have been verified at the circuit level. More specifically, array 610 illustrates N instances, Instance 1_1, Instance 1_2, ..., Instance 1_N, respectively, for IO 1_1, IO 1_2, ..., IO 1_N. The N instances are connected to VDD and VSS for power clamp 620[1]. Each instance includes ESD diodes to represent the explicit ESD protection circuits, ESD victim type to represent the sub-cells of implicit ESD paths, and logic circuits not directly related to the IO connection. Each instance is a verified model IO instance. Array 610 is an array of verified model IO instance.

The strings of IO pads and corresponding circuitry continue for a total of M string. More specifically, array 610 illustrates N instances in string 2: Instance 2_1, Instance 2_2, ..., Instance 2_N, respectively, for IO 2_1, 10 2_2, ..., IO 2_N. The N instances are connected to VDD and VSS for power clamp 620[2]. Array 610 illustrates N instances in string M: Instance M_1, Instance M_2, ..., Instance M_N, respectively, for 10 M_1, IO M_2, ..., IO M_N. The N instances are connected to VDD and VSS for power clamp 620[M].

Once the cell is signed off in a standalone analysis, it can be instantiated in a bundle or multiple bundles in a top-level analysis. The verified instances can be signed off with a preprepared setup file for ESD verification tests (e.g., P2P, CD check). In the setup, the previously identified victim cells can be black-boxed and removed from the test calculations with exclude statement in the setup file.

In one example, the ESD sign-off procedure of array 610 (e.g., a D2D IO array or other IO) with prepared subcell hierarchy and setup file is executed only on meaningful paths to power clamp and pad or any circuitry added to the pad that is different from the circuitry signed off in the circuit level check of the IO instance. In one example, the system performs an analysis of the array to detect any paths that are not included in verified IO instances, and are not connections between IO that are to be checked in the array analysis.

System 600 illustrates transistor 630, which represents a forbidden pull-down that is included at the pad level, at IO 2_1. Such a path is forbidden, because any such path should already be verified with the verification of Instance 2_1. Thus, transistor 630 represents additional circuitry added on the to -level to the array of IOs, which can be flagged during a check, as not being excluded from check by a black-box statement. A user can determine why transistor 630 showed up in the analysis and take appropriate steps to correct the model for verification.

In one example, unplanned paths can be eliminated from the model. In one example, the user can modify the test simulation to capture unplanned paths or unexpected paths not in the bottom-up model that are identified by the scan. The unexpected ESD path can be defined as a device or combination of devices or circuit having multiple devices. The unexpected path can represent a path that is not allowed to be connected at the pad based on ESD rules.

In one example, the user can apply parameters to the verification to account for paths that were not verified with the bottom-up model. In one example, the system checks at the small block level for the pad. In one example, different pads have different parameters, and thus, the test system first verifies each type of pad. Each type of pad can then be used as separate black boxes for the specific type of pad that has been verified, and then full die package verification can execute based on the pad types verified at the lower level.

Thus, the test system can generate an ESD verification model from multiple verified IO instances. The chip-level model verifies ESD protection between the IO instances instead of needing to evaluate the ESD protection of each individual IO pad. Thus, the chip-level model can focus on verifying ESD protection between IO pads, for example, to test chip to chip connections.

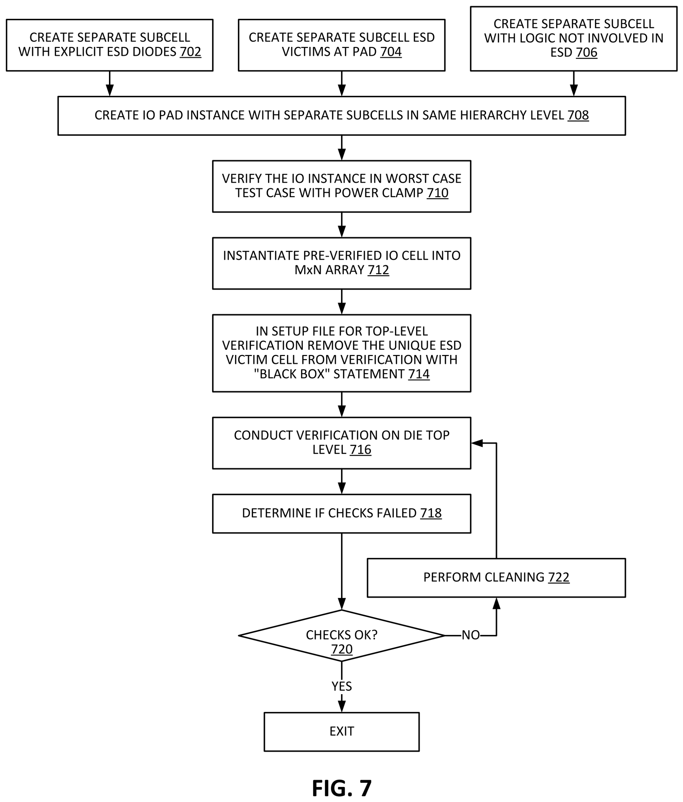

**Figure 7** is a flow diagram of an example of process for performing an ESD verification. The process of the flowchart represents a flow of operation that can be executed by an example of system 100.

In one example, the flow begins with preparation for the verification. In one example, the user creates cells and sub-cells through the system. Whether automatically or through the input of a user, the system generates an IO model instance with sub-cells for verification.

In one example, the system creates separate sub-cells for an IO instance for explicit ESD discharge paths through ESD diodes, at 702. In one example, the system creates separate sub-cells for ESD victims at the pad, at 704. The victims can have implicit ESD discharge paths. In one example, the system creates the implicit discharge path. In one example, the system creates separate sub-cells with logic not involved in ESD discharge, at 706.

The system can create the IO pad instance with separate sub-cells in the same hierarchy level, at 708. In one example, the system verifies the IO instance in a worst-case layout test-case with the power clamp connected, at 710. In one example, the worst-case test case has a maximal allowed resistance R2VDD and R2VSS between the power clamp and the IO pad instance.

In one example, the application of verification of the IO instance is applied to one type of IO cell. In one example, the application of verification of the IO instance is applied to several types of IO cells. In either case, the IO instances are generated with a pre-prepared hierarchy of sub-cells.

In one example, the system instantiates a pre-verified IO cell into an MxN array. Once the single IO instance is verified, it can be placed in MxN array and instantiated in the top-level of the die, at 712. In one example, in a setup file for a top-level verification of the die is prepared with black-box statements, which removes the unique ESD victim cell from the check, at 714. The ESD victim model can include several parallel legs of driver or other circuitry at the pad. In one example, the system checks each leg of a driver for parameters such as resistance of implicit body diode to clamp. The verification includes multiplying the runtime by the number of parallel paths checked by the tool.

The removal of ESD victim can result in the reduction of a branch-point check of resistance between the victim circuit and the diode. Since the branch-point to victim is checked already on the test case, it is obsolete for the verification of the top-level of the die. For different checks, like TOPO, P2P, or CD, different sub-cells can be included or excluded from the black-box statement, depending on the needs. The system conducts a verification on the die top level, at 716.

In one example, the system determines if the checks failed, at 718. If the checks do not pass, at 720 NO branch, the user can use the system to perform cleaning of the system model, at 722. The system check can be conducted again and cleaned until the checks execute correctly. In one example, if the checks are OK, at 720 YES branch, the system can exit.

In one example, the method described can be applied for ESD sign-off, which verifies a design for ESD performance. In one example, the method described can be applied to physical verification or reliability checking. In one example, the ESD sign-off and a physical verification or physical reliability checking can be performed using the bottom-up, top-down analysis described. In one example, the method is applied for sign-off of the IC (integrated circuit) and package.

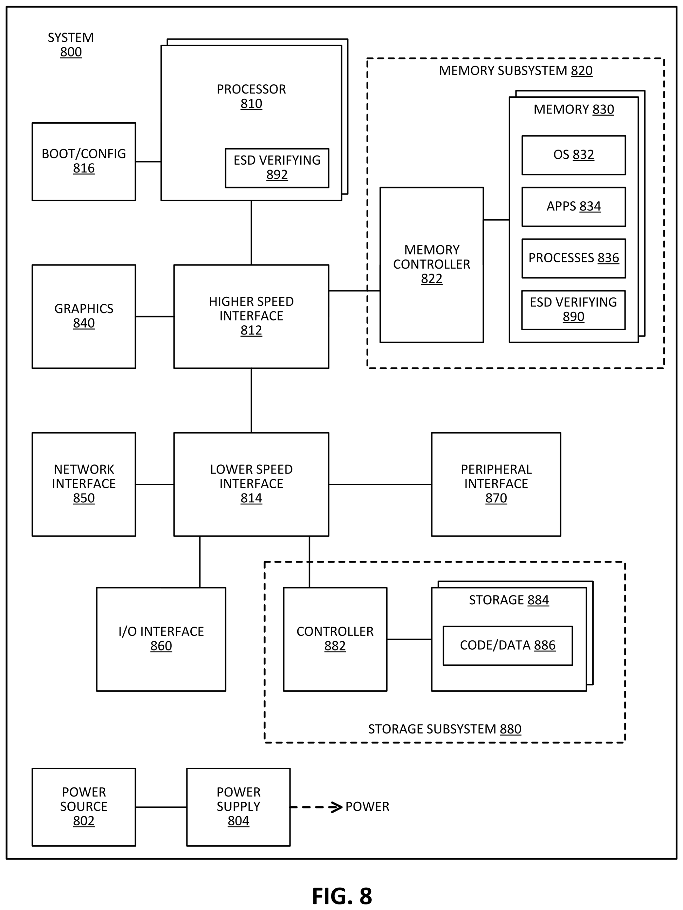

**Figure 8** is a block diagram of an example of a computing system with which ESD verification can be implemented. System 800 represents a computing device in accordance with any example herein, and can be a laptop computer, a desktop computer, a tablet computer, a server, a gaming or entertainment control system, embedded computing device, or other electronic device.

System 800 represents a system in accordance with an example of system 100. System 800 represents computer system resources for executing an ESD verification test in accordance with any example herein. ESD verifying 890 represents code stored in memory 830, which can include the circuit definition with the IOs to be tested, as well as the models used for testing the ESD current paths. ESD verifying 892 represents code executed by processor 810 to execute the verification processes. The ESD verification performs an analysis at the low level of components, and then verified components can be instantiated multiple times in an array for a top-down analysis.

System 800 includes processor 810 can include any type of microprocessor, CPU (central processing unit), GPU (graphics processing unit), processing core, or other processing hardware, or a combination, to provide processing or execution of instructions for system 800. Processor 810 can be a host processor device. Processor 810 controls the overall operation of system 800, and can be or include, one or more programmable general-purpose or special-purpose microprocessors, DSPs (digital signal processors), programmable controllers, ASICs (application specific integrated circuits), PLDs (programmable logic devices), or a combination of such devices.

System 800 includes boot/config 816, which represents storage to store boot code (e.g., BIOS (basic input/output system)), configuration settings, security hardware (e.g., TPM (trusted platform module)), or other system level hardware that operates outside of a host OS. Boot/config 816 can include a nonvolatile storage device, such as ROM (read-only memory), flash memory, or other memory devices.

In one example, system 800 includes interface 812 coupled to processor 810, which can represent a higher speed interface or a high throughput interface for system components that need higher bandwidth connections, such as memory subsystem 820 or graphics interface components 840. Interface 812 represents an interface circuit, which can be a standalone component or integrated onto a processor die. Interface 812 can be integrated as a circuit onto the processor die or integrated as a component on a system on a chip. Where present, graphics interface 840 interfaces to graphics components for providing a visual display to a user of system 800. Graphics interface 840 can be a standalone component or integrated onto the processor die or system on a chip. In one example, graphics interface 840 can drive a display with high definition that provides an output to a user. In one example, the display can include a touchscreen display. In one example, graphics interface 840 generates a display based on data stored in memory 830 or based on operations executed by processor 810 or both.

Memory subsystem 820 represents the main memory of system 800, and provides storage for code to be executed by processor 810, or data values to be used in executing a routine. Memory subsystem 820 can include one or more varieties of RAM (random-access memory) such as DRAM, 3DXP (three-dimensional crosspoint), or other memory devices, or a combination of such devices. Memory 830 stores and hosts, among other things, OS (operating system) 832 to provide a software platform for execution of instructions in system 800. Additionally, applications 834 can execute on the software platform of OS 832 from memory 830. Applications 834 represent programs that have their own operational logic to perform execution of one or more functions. Processes 836 represent agents or routines that provide auxiliary functions to OS 832 or one or more applications 834 or a combination. OS 832, applications 834, and processes 836 provide software logic to provide functions for system 800. In one example, memory subsystem 820 includes memory controller 822, which is a memory controller to generate and issue commands to memory 830. It will be understood that memory controller 822 could be a physical part of processor 810 or a physical part of interface 812. For example, memory controller 822 can be an integrated memory controller, integrated onto a circuit with processor 810, such as integrated onto the processor die or a system on a chip.

While not specifically illustrated, it will be understood that system 800 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a PCI (peripheral component interconnect) bus, a USB (universal serial bus), or other bus, or a combination.

In one example, system 800 includes interface 814, which can be coupled to interface 812. Interface 814 can be a lower speed interface than interface 812. In one example, interface 814 represents an interface circuit, which can include standalone components and integrated circuitry. In one example, multiple user interface components or peripheral components, or both, couple to interface 814. Network interface 850 provides system 800 the ability to communicate with remote devices (e.g., servers or other computing devices) over one or more networks. Network interface 850 can include an Ethernet adapter, wireless interconnection components, cellular network interconnection components, USB (universal serial bus), or other wired or wireless standards-based or proprietary interfaces. Network interface 850 can exchange data with a remote device, which can include sending data stored in memory or receiving data to be stored in memory.

In one example, system 800 includes one or more I/O (input/output) interface(s) 860. I/O interface 860 can include one or more interface components through which a user interacts with system 800 (e.g., audio, alphanumeric, tactile/touch, or other interfacing). Peripheral interface 870 can include any hardware interface not specifically mentioned above. Peripherals refer generally to devices that connect dependently to system 800. A dependent connection is one where system 800 provides the software platform or hardware platform or both on which operation executes, and with which a user interacts.

In one example, system 800 includes storage subsystem 880 to store data in a nonvolatile manner. In one example, in certain system implementations, at least certain components of storage 880 can overlap with components of memory subsystem 820. Storage subsystem 880 includes storage device(s) 884, which can be or include any conventional medium for storing large amounts of data in a nonvolatile manner, such as one or more magnetic, solid state, NAND, 3DXP, or optical based disks, or a combination. Storage 884 holds code or instructions and data 886 in a persistent state (i.e., the value is retained despite interruption of power to system 800). Storage 884 can be generically considered to be a "memory," although memory 830 is typically the executing or operating memory to provide instructions to processor 810. Whereas storage 884 is nonvolatile, memory 830 can include volatile memory (i.e., the value or state of the data is indeterminate if power is interrupted to system 800). In one example, storage subsystem 880 includes controller 882 to interface with storage 884. In one example controller 882 is a physical part of interface 814 or processor 810, or can include circuits or logic in both processor 810 and interface 814.

Power source 802 provides power to the components of system 800. More specifically, power source 802 typically interfaces to one or multiple power supplies 804 in system 800 to provide power to the components of system 800. In one example, power supply 804 includes an AC to DC (alternating current to direct current) adapter to plug into a wall outlet. Such AC power can be renewable energy (e.g., solar power) power source 802. In one example, power source 802 includes a DC power source, such as an external AC to DC converter. In one example, power source 802 or power supply 804 includes wireless charging hardware to charge via proximity to a charging field. In one example, power source 802 can include an internal battery or fuel cell source.

In general with respect to the descriptions herein, in one aspect, a test system includes: a memory device to store a circuit definition having an array of IO (input/output) connections to be verified, the IO connections each having an ESD (electrostatic discharge) protection circuit and ESD victim circuits coupled to a power clamp; and a processor device coupled to the memory device, the processor to perform circuit verification on the circuit definition, including to generate an ESD verification model IO instance with the ESD protection circuit and the ESD victim circuits as separate cells at a same level of verification hierarchy, verify the model IO instance at a worst case connection test case to a power clamp to verify ESD protection within the model IO instance, and generate an ESD verification model IO array from multiple verified IO instances, the model IO array to verify ESD protection between the verified model IO instances.

In accordance with an example of the test system, the processor is to generate the model IO instance with logic circuits not directly connected to the IO connection as another separate cell at the same level of verification hierarchy as the separate cells for the ESD protection circuit and the ESD victim circuits. In accordance with any preceding example of the test system, in one example, the processor is to generate the model IO instance with a specific victim circuit as another separate cell at the same level of verification hierarchy as the separate cells for the ESD protection circuit and the ESD victim circuits. In accordance with any preceding example of the test system, in one example, the ESD victim circuits comprise a receiver driver and a transmitter driver. In accordance with any preceding example of the test system, in one example, the ESD protection circuit comprises a first ESD diode between a low voltage reference and the IO connection and a second ESD diode between the IO connection and a high voltage reference. In accordance with any preceding example of the test system, in one example, the processor is to verify the model IO instance having a worst-case resistance between the IO instance and the power clamp. In accordance with any preceding example of the test system, in one example, the processor is to generate the model IO array to verify ESD protection between model IO instances to test chip to chip connections. In accordance with any preceding example of the test system, in one example, the processor to further: check for unexpected ESD paths present in the model IO array that are not included in verified IO instances.

In general with respect to the descriptions herein, in one aspect, a method for circuit verification includes: receiving a circuit definition having an array of IO (input/output) connections to be verified, the IO connections each having an ESD (electrostatic discharge) protection circuit and ESD victim circuits coupled to a power clamp; generating an ESD verification model IO instance with the ESD protection circuit and the ESD victim circuits as separate cells at a same level of verification hierarchy; verifying the model IO instance at a worst-case connection test case to a power clamp to verify ESD protection within the model IO instance; and generating an ESD verification model IO array from multiple verified IO instances, the model IO array to verify ESD protection between the model IO instances.

In accordance with an example of the method, generating the model IO instance comprises generating the model IO instance with logic circuits not directly connected to the IO connection as another separate cell at the same level of verification hierarchy as the separate cells for the ESD protection circuit and the ESD victim circuits. In accordance with any preceding example of the method, in one example, generating the model IO instance comprises generating the model IO instance with a specific victim circuit as another separate cell at the same level of verification hierarchy as the separate cells for the ESD protection circuit and the ESD victim circuits. In accordance with any preceding example of the method, in one example, the ESD victim circuits comprise a receiver driver and/or a transmitter driver. In accordance with any preceding example of the method, in one example, the ESD protection circuit comprises a first ESD diode between a low voltage reference and the IO connection and a second ESD diode between the IO connection and a high voltage reference. In accordance with any preceding example of the method, in one example, verifying the model IO instance at the worst-case connection test case comprises verifying the model IO instance having a worst case resistance between the IO instance and the power clamp. In accordance with any preceding example of the method, in one example, generating the model IO array to verify ESD protection between the model IO instances comprises generating the model IO array to verify ESD protection between model IO instances to test chip to chip connections. In accordance with any preceding example of the method, in one example, the method includes checking for unexpected ESD paths present in the model IO array that are not included in verified IO instances. In accordance with any preceding example of the method, in one example, the receiving, generating, verifying, and generating are performed sequentially for a bottom-up analysis from circuit to cell to IC level, and further comprising a top-down analysis from the IC level to the cell to the circuit level.

In general with respect to the descriptions herein, in one aspect, a computer readable storage medium having content stored thereon, when executed causes a machine to perform a method for circuit verification including: receiving a circuit definition having an array of IO (input/output) connections to be verified, the IO connections each having an ESD (electrostatic discharge) protection circuit and ESD victim circuits coupled to a power clamp; generating an ESD verification model IO instance with the ESD protection circuit and the ESD victim circuits as separate cells at a same level of verification hierarchy; verifying the model IO instance at a worst-case connection test case to a power clamp to verify ESD protection within the model IO instance; and generating an ESD verification model IO array from multiple verified IO instances, the model IO array to verify ESD protection between the model IO instances.

In accordance with one example of the computer readable storage medium, generating the model IO instance comprises generating the model IO instance with logic circuits not directly connected to the IO connection as another separate cell at the same level of verification hierarchy as the separate cells for the ESD protection circuit and the ESD victim circuits. In accordance with any preceding example of the computer readable storage medium, in one example, generating the model IO instance comprises generating the model IO instance with a specific victim circuit as another separate cell at the same level of verification hierarchy as the separate cells for the ESD protection circuit and the ESD victim circuits. In accordance with any preceding example of the computer readable storage medium, in one example, the ESD victim circuits comprise a receiver driver and/or a transmitter driver. In accordance with any preceding example of the computer readable storage medium, in one example, the ESD protection circuit comprises a first ESD diode between a low voltage reference and the IO connection and a second ESD diode between the IO connection and a high voltage reference. In accordance with any preceding example of the computer readable storage medium, in one example, verifying the model IO instance at the worst-case connection test case comprises verifying the model IO instance having a worst case resistance between the IO instance and the power clamp. In accordance with any preceding example of the computer readable storage medium, in one example, generating the model IO array to verify ESD protection between the model IO instances comprises generating the model IO array to verify ESD protection between model IO instances to test chip to chip connections. In accordance with any preceding example of the computer readable storage medium, in one example, the method includes checking for unexpected ESD paths present in the model IO array that are not included in verified IO instances. In accordance with any preceding example of the computer readable storage medium, in one example, the receiving, generating, verifying, and generating are performed sequentially for a bottom-up analysis from circuit to cell to IC level, and further comprising a top-down analysis from the IC level to the cell to the circuit level.

Flow diagrams as illustrated herein provide examples of sequences of various process actions. The flow diagrams can indicate operations to be executed by a software or firmware routine, as well as physical operations. A flow diagram can illustrate an example of the implementation of states of a finite state machine (FSM), which can be implemented in hardware and/or software. Although shown in a particular sequence or order, unless otherwise specified, the order of the actions can be modified. Thus, the illustrated diagrams should be understood only as examples, and the process can be performed in a different order, and some actions can be performed in parallel. Additionally, one or more actions can be omitted; thus, not all implementations will perform all actions.

To the extent various operations or functions are described herein, they can be described or defined as software code, instructions, configuration, and/or data. The content can be directly executable ("object" or "executable" form), source code, or difference code ("delta" or "patch" code). The software content of what is described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

Besides what is described herein, various modifications can be made to what is disclosed and implementations of the invention without departing from their scope. Therefore, the illustrations and examples herein should be construed in an illustrative, and not a restrictive sense. The scope of the invention should be measured solely by reference to the claims that follow.

## Claims

1. A test system comprising:
a memory device to store a circuit definition having an array of IO (input/output) connections to be verified, the IO connections each having an ESD (electrostatic discharge) protection circuit and ESD victim circuits coupled to a power clamp; and
a processor device coupled to the memory device, the processor to perform circuit verification on the circuit definition, including to generate an ESD verification model IO instance with the ESD protection circuit and the ESD victim circuits as separate cells at a same level of verification hierarchy, verify the model IO instance at a worst case connection test case to a power clamp to verify ESD protection within the model IO instance, and generate an ESD verification model IO array from multiple verified IO instances, the model IO array to verify ESD protection between the model IO instances.

2. The test system of claim 1, wherein the processor is to generate the model IO instance with logic circuits not directly connected to the IO connection as another separate cell at the same level of verification hierarchy as the separate cells for the ESD protection circuit and the ESD victim circuits.

3. The test system of either claim 1 or 2, wherein the processor is to generate the model IO instance with a specific victim circuit as another separate cell at the same level of verification hierarchy as the separate cells for the ESD protection circuit and the ESD victim circuits.

4. The test system of any one of claims 1 to 3, wherein the ESD protection circuit comprises a first ESD diode between a low voltage reference and the IO connection and a second ESD diode between the IO connection and a high voltage reference.

5. The test system of any one of claims 1 to 4, wherein the processor is to verify the model IO instance having a worst case resistance between the IO instance and the power clamp.

6. The test system of any one of claims 1 to 5, wherein the processor is to generate the model IO array to verify ESD protection between model IO instances to test chip to chip connections.

7. The test system of any one of claims 1 to 6, the processor to further:
check for unexpected ESD paths present in the model IO array that are not included in verified IO instances.

8. A method for circuit verification comprising:
receiving a circuit definition having an array of IO (input/output) connections to be verified, the IO connections each having an ESD (electrostatic discharge) protection circuit and ESD victim circuits coupled to a power clamp;
generating an ESD verification model IO instance with the ESD protection circuit and the ESD victim circuits as separate cells at a same level of verification hierarchy;
verifying the model IO instance at a worst case connection test case to a power clamp to verify ESD protection within the model IO instance; and
generating an ESD verification model IO array from multiple verified IO instances, the model IO array to verify ESD protection between the model IO instances.

9. The method of claim 8, wherein generating the model IO instance comprises generating the model IO instance with logic circuits not directly connected to the IO connection as another separate cell at the same level of verification hierarchy as the separate cells for the ESD protection circuit and the ESD victim circuits.

10. The method of either claim 8 or 9, wherein generating the model IO instance comprises generating the model IO instance with a specific victim circuit as another separate cell at the same level of verification hierarchy as the separate cells for the ESD protection circuit and the ESD victim circuits.

11. The method of any one of claims 8 to 10, wherein the ESD protection circuit comprises a first ESD diode between a low voltage reference and the IO connection and a second ESD diode between the IO connection and a high voltage reference.

12. The method of any one of claims 8 to 11, wherein verifying the model IO instance at the worst case connection test case comprises verifying the model IO instance having a worst case resistance between the IO instance and the power clamp.

13. The method of any one of claims 8 to 12, wherein generating the model IO array to verify ESD protection between the model IO instances comprises generating the model IO array to verify ESD protection between model IO instances to test chip to chip connections.

14. The method of any one of claims 9 to 13, further comprising:
checking for unexpected ESD paths present in the model IO array that are not included in verified IO instances.

15. The method of any one of claims 9 to 14, wherein the receiving, generating, verifying, and generating are performed sequentially for a bottom-up analysis from circuit to cell to IC level, and further comprising a top-down analysis from the IC level to the cell to the circuit level.
